# EUROPÄISCHE PATENTSCHRIFT

(11) **EP 4 443 036 B1**
(45) Veröffentlichungstag und Bekanntmachung des Hinweises auf die Patenterteilung: **09.12.2026**
(21) Anmeldenummer: 23166744.5
(22) Anmeldetag: 05.04.2023
(51) Int. Cl.: F16K 31/04, F16K 1/22, F16B 2/06, F16B 2/12, F16D 1/112, F24F 13/14

(54) **ACHSAUFNAHME FÜR EINEN LUFTKLAPPENDREHANTRIEB UND LUFT-KLAPPENDREHANTRIEB**
SPINDLE SUPPORT FOR A VENTILATION FLAP ROTARY DRIVE AND VENTILATION FLAP ROTARY DRIVE
LOGEMENT D'ESSIEU POUR UN ENTRAÎNEMENT ROTATIF DE VOLET D'AIR ET ENTRAÎNEMENT ROTATIF DE VOLET D'AIR

(43) Veröffentlichungstag der Anmeldung: 09.10.2024
(73) Patentinhaber: Siemens Schweiz AG, 8047 Zürich (CH)
(72) Erfinder: Wattenhofer, Severin, 6344 Meierskappel (CH)
(74) Vertreter: Siemens Patent Attorneys

(56) Entgegenhaltungen:
- EP-A1- 0 282 116
- EP-A2- 1 088 996
- DE-A1- 102011 013 552
- GB-A- 1 396 645
- GB-A- 2 539 395
- US-A1- 2022 106 987
- US-B2- 6 505 991

## Beschreibung

Die Erfindung betrifft im weitesten Sinne eine Stellantriebseinrichtung sowie konkret eine Stellantriebseinrichtung für eine Luftklappe oder dergleichen in einer Anlage für die Heizung, Lüftung oder Kühlung in einem Gebäude (Luftklappendrehantrieb). Stellantriebseinrichtungen in Form von Luftklappendrehantrieben sind an sich bekannt.

Ein Luftklappendrehantrieb umfasst eine Antriebseinrichtung, üblicherweise einen Elektromotor, Mittel zur kraft- und formschlüssigen Kontaktierung einer Achse einer Luftklappe (Achsaufnahme) sowie optional ein Getriebe zwischen der Antriebseinrichtung und der Achsaufnahme.

Achsaufnahmen sind an sich bekannt, zum Beispiel aus der US 6,505,991 B2 oder der US 2009/0052982 A1. Die Anmelderin bietet unter der Produktbezeichnung GS MK2 eine eigene Achsaufnahme an.

Bekannte Achsaufnahmen umfassen einen Zugbügel und einen relativ zum Zugbügel beweglichen Druckbügel, wobei die Bewegung des Druckbügels nach Art eines Spindelantriebs mittels eines drehbaren Triebschafts erfolgt. Je nach Position des Druckbügels und je nach Umfang der jeweils mittels der Achsaufnahme zu fixierenden Achse ist eine Vielzahl von Drehungen des Triebschafts erforderlich. Auch zum Lösen der Fixierung einer Achse ist zumindest eine Mehrzahl von Drehungen des Triebschafts erforderlich. Dies ist zumindest zeitaufwendig.

In der US 2022/106987 A1 ist eine Achsaufnahme für einen Luftklappendrehantrieb und ein Luftklappendrehantrieb mit einer solchen Achsaufnahme beschrieben, welche gegenläufig und jeweils in Richtung auf eine Achse bewegliche zug- und druckseitige Komponenten und auf der Zugseite als bewegliche Komponente einen Zugbügel aufweist. Zur Beweglichkeit des Zugbügels ist ein Gewinde des Zugbügels mit einem Gewinde einer Mutter im Eingriff, wobei der Zugbügel das Gewinde in einem Zugbügeloberteil aufweist und das Gewinde dort an einer Unterseite des Zugbügeloberteils beginnt und unterhalb einer Oberseite des Zugbügeloberteils endet.

Aus der GB 2539395 A ist ein Klemmmechanismus mit einer Mutter, einer Klemmplatte, einem Bolzen und einem Block bekannt. Die Mutter hat eine axiale Bohrung mit einem Gewinde, das an einer Innenfläche der Bohrung ausgebildet ist. Der Bolzen hat ein Paar Arme und ein Querstück, das die Arme miteinander verbindet. Die Arme haben ein Schraubgewinde, das auf einer Außenfläche der Arme ausgebildet ist und dem Schraubengewinde der Mutter entspricht. Die Klemmplatte hat einen länglichen Körper, der schmaler ist als der Abstand zwischen den Armen, so dass sie zwischen die Arme passt. Der Block kann mit der Mutter in Eingriff gebracht werden, um sich mit ihr zu bewegen, wobei der Block sich zwischen den Armen des Bolzens erstreckt. Der Block wirkt der Biegung der Arme zueinander entgegen, wenn die Mutter auf den Bolzen geschraubt wird.

In der GB 1396645 A ist eine Kabelschelle mit einem im wesentlichen U-förmigen Schellenkörper und einem darin eingreifbaren Klemmschieber beschrieben, wobei der Schellenkörper aus einem Stapel von gegeneinander isolierten Platten gebildet ist, die durch Verbindungsmittel wie Nieten zusammengehalten werden. Alle Platten haben eine identische Form und bilden zusammen an den Schenkeln des Körpers zwei einander zugewandte Zahnstangen, deren Zähne durch gerade Linien begrenzt sind. Der Klemmschieber ist an zwei gegenüberliegenden Seitenflächen mit nach außen gerichteten Zähnen versehen, die mit den Zahnstangen in Eingriff gebracht werden können, um den Schieber im Körper in der Kabelklemmstellung zu sichern.

Aus der EP 0282116 A1 ist eine Abzweigklemme zum Anschließen eines elektrischen Abzweigleiters an einen durchgehenden elektrischen Hauptleiter bekannt. Die Abzweigklemme umfasst einen elektrisch leitenden, durch Klemmmittel am Hauptleiter festlegbaren Kontaktblock. Mit diesem wirkt eine von außen drehbare, elektrisch leitende Kupplungsschraube mittels einer Gewindebohrung zusammen. Die Kupplungsschraube kann durch Drehen mit dem Hauptleiter in Kontakt gebracht werden. Die Klemmmittel stützen den Hauptleiter auf ihrer der Kupplungsschraube abgewandten Seite ab. Der Kontaktblock weist für jeden Abzweigleiter eine Bohrung zu dessen Aufnahme und eine von außen drehbare Schraube zur Befestigung dieses Abzweigleiters in dieser Bohrung auf. Die Klemmmittel bestehen aus zwei separaten, etwa U-förmigen Klemmteilen, die von zwei Seiten über den Hauptleiter gestülpt werden können und unter Umschließung des Kontaktblocks miteinander gekoppelt sind.

Aus der EP 1088996 A2 ist ein Befestigungselement für ein zylindrisches Bauteil in einem Schlitz in einer mechanischen Baugruppe bekannt. Der Schlitz ist durch zwei Passflächen, die sich an einem Scheitelpunkt treffen, und eine dritte Fläche, die auf eine der Passflächen trifft, definiert. Der Schlitz nimmt das zylindrische Bauteil in Kontakt mit den beiden Passflächen auf. Das Befestigungselement umfasst eine Fläche, die das zylindrische Bauteil berührt, einen Gewindeeingriffsmechanismus, der das Befestigungselement durch ein Durchgangsloch in dem Befestigungselement an der Baugruppe befestigt, und einen vorstehenden Abschnitt, der einen Eingriff gewährleistet und eine Drehung des Befestigungselements durch Eingriff mit der dritten Fläche verhindert.

Eine Aufgabe der hier vorgeschlagenen Neuerung besteht darin, eine Achsaufnahme anzugeben, welche die vorstehend skizzierten Nachteile vermeidet.

Diese Aufgabe wird erfindungsgemäß mittels einer Achsaufnahme mit den Merkmalen des Anspruchs 1 gelöst. Die Achsaufnahme ist zur Fixierung an einer Achse, insbesondere einer Achse einer Luftklappe, vorgesehen. Die Achsaufnahme umfasst einen Zugbügel und einen mittels eines Triebschafts relativ zum Zugbügel beweglichen Druckbügel. Der Triebschaft ist in einer Triebschaftführung im Zugbügel geführt. Die Besonderheit besteht darin, dass der Triebschaft und die Triebschaftführung als Schnellspannvorrichtung fungieren.

Als Formschlusskontur und Formschlussgegenkontur fungiert jeweils ein Sektorgewinde, zum Beispiel ein Sektorgewinde, das der Triebschaft und die Triebschaftführung jeweils zumindest in einem Bereich von 90° des Triebschaftumfangs und 90° des Umfangs der Triebschaftführung aufweisen.

Indem der Triebschaft und die Triebschaftführung als Schnellspannvorrichtung fungieren, also indem der Triebschaft und die Triebschaftführung für eine Funktion als Schnellspannvorrichtung ausgeführt sind, kann zum anfänglichen Einspannen einer mittels der Achsaufnahme zu fixierenden Achse, aber auch zum Lösen der Fixierung, die Schnellspannvorrichtung genutzt werden. Dabei wird der Triebschaft axial bewegt und erst zum Fixieren der Schnellspannvorrichtung gedreht. Ein aufwendiges vielfaches Drehen des Triebschafts zum anfänglichen Einspannen der jeweiligen Achse entfällt. Das Fixieren der jeweiligen Achse erfolgt damit insgesamt sehr viel schneller und der Bewegungsablauf ist damit für die jeweilige Bedienperson leichter und angenehmer. Dies gilt entsprechend auch für das Lösen der Fixierung.

Vorteilhaft fungieren der Triebschaft und die Triebschaftführung als Schnellspannvorrichtung, indem der Triebschaft in oder auf dessen Außenoberfläche eine Formschlusskontur und die Triebschaftführung in oder auf deren Innenoberfläche eine formschlüssig zu der Formschlusskontur passende Formschlussgegenkontur aufweisen. Durch Drehung des Triebschafts lassen sich die Formschlusskontur und die Formschlussgegenkontur miteinander in Eingriff bringen (sind miteinander in Eingriff bringbar). Dadurch ist der Triebschaft in der Triebschaftführung axial fixierbar und der Triebschaft ist in der Triebschaftführung axial fixiert, wenn die Formschlusskontur und die Formschlussgegenkontur miteinander in Eingriff sind.

Vorteilhafte Ausgestaltungen der hier vorgeschlagenen Achsaufnahme sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform der Achsaufnahme nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen.

Die Schnellspannvorrichtung und die entsprechende axiale Beweglichkeit des Triebschafts ermöglichen ein schnelles anfängliches Einspannen einer zu fixierenden Achse und ein schnelles Lösen einer Fixierung. Zur finalen Fixierung einer mittels der Schnellspannvorrichtung eingespannten Achse ist eine konzentrisch mit dem Triebschaft im Triebschaft laufende Feststellschraube vorgesehen, welche zum Beispiel an ihrem freien Ende den Druckbügel trägt oder welche mit ihrem freien Ende zumindest auf den Druckbügel wirkt.

Bei einer vorteilhaften Ausführungsform der Achsaufnahme weist diese eine Rückstellvorrichtung zur selbsttätigen Auslösung eines Rückhubs des Druckbügels auf, nämlich zur Auslösung des Rückhubs, wenn die Formschlusskontur und die Formschlussgegenkontur außer Eingriff sind. Aufgrund eines solchen mittels Rückstellvorrichtung ausgelösten Rückhubs wird eine zuvor mittels der Achsaufnahme fixierte Achse unmittelbar wieder frei, sobald die Formschlusskontur und die Formschlussgegenkontur außer Eingriff sind.

Bei einer vorteilhaften Ausführungsform einer Achsaufnahme mit Rückstellvorrichtung umfasst die Rückstellvorrichtung eine Spiralfeder und einen Federkäfig, wobei der Druckbügel am Federkäfig angebracht ist, wobei sich die Spiralfeder einerseits außen am Zugbügel und andererseits innen am Federkäfig abstützt und wobei mittels der Spiralfeder und des Federkäfigs ein Rückhub des Druckbügels auslösbar ist, wenn die Formschlusskontur und die Formschlussgegenkontur außer Eingriff sind. Eine solche Rückstellvorrichtung ist mechanisch vergleichsweise einfach, benötigt nur wenige Teile und ist im Rahmen der Fertigung der Achsaufnahme sowie auch im Rahmen einer Wartung oder eventuellen Reparatur der Achsaufnahme ausreichend leicht zu montieren und zu handhaben.

Bei einer vorteilhaften Ausführungsform der Achsaufnahme weist diese einen beweglichen Betätigungsschutz auf, welcher dann wirksam ist, wenn die Formschlusskontur und die Formschlussgegenkontur außer Eingriff sind. Wenn die Formschlusskontur und die Formschlussgegenkontur außer Eingriff sind, ist der Triebschaft noch axial beweglich. Auch ein anfängliches Einspannen der jeweils zu fixierenden Achse ist dann noch nicht erfolgt (noch gar nicht möglich). In dieser Situation soll eine Betätigung der zum finalen Fixieren der Achse vorgesehenen Feststellschraube nicht möglich sein. Dies gewährleistet der Betätigungsschutz, indem dieser nur dann wirksam ist, wenn die Formschlusskontur und die Formschlussgegenkontur außer Eingriff sind.

Bei einer vorteilhaften Ausführungsform einer Achsaufnahme mit Betätigungsschutz fungiert als Betätigungsschutz ein teleskopierbarer Schutzkragen, welcher in ein zum Drehen des Triebschafts bestimmtes Betätigungselement zurückgezogen wird (zurückziehbar ist), wenn durch entsprechende Drehung des Triebschafts die Formschlusskontur und die Formschlussgegenkontur in Eingriff kommen und schließlich in Eingriff sind, und welcher in die Betätigungsschutzstellung (ausgefahrene Stellung/teleskopierte Stellung) ausgefahren ist, wenn die Formschlusskontur und die Formschlussgegenkontur außer Eingriff sind.

Vorteilhaft weist der teleskopierbare Schutzkragen zu dessen teleskopierbarer Beweglichkeit in seiner Innenoberfläche zumindest eine schraubenlinienförmige Führungskulisse auf, in welcher ein Kulissenstein einer Schutzkragenbasis läuft, wobei der Schutzkragen mit dem Betätigungselement drehbar ist und die Schutzkragenbasis bei einer Drehung des Betätigungselements nicht mitdreht.

Insgesamt ist die hier vorgeschlagene Neuerung auch ein Luftklappendrehantrieb mit einer Achsaufnahme wie hier und im Folgenden beschrieben sowie die Verwendung einer solchen Achsaufnahme zum Fixieren einer Achse einer Luftklappe.

Unabhängig vom grammatikalischen Geschlecht eines bestimmten Begriffes sind Personen mit männlicher, weiblicher oder anderer Geschlechteridentität mit umfasst.

Nachfolgend wird ein Ausführungsbeispiel der hier vorgeschlagenen Achsaufnahme anhand der Zeichnung näher erläutert. Einander entsprechende Gegenstände oder Elemente sind in allen Figuren mit den gleichen Bezugszeichen versehen.

Das oder jedes Ausführungsbeispiel ist nicht einschränkend auszulegen. Vielmehr sind im Rahmen der vorliegenden Offenbarung durchaus auch Ergänzungen und Modifikationen der hier vorgeschlagenen Achsaufnahme möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: eine Achsaufnahme,
- FIG 2: einen Zugbügel der Achsaufnahme mit einer dortigen Triebschaftführung,
- FIG 3: einen Triebschaft der Achsaufnahme mit einem Betätigungselement an einem Ende des Triebschafts,
- FIG 4: die Achsaufnahme gemäß FIG 1 mit einer mittels der Achsaufnahme eingeklemmten Achse,
- FIG 5: den Zugbügel gemäß FIG 2 und einen Abschnitt des Triebschafts gemäß FIG 3 sowie das Zusammenwirken einer Formschlusskontur am Triebschaft sowie einer Formschlussgegenkontur in der Triebschaftführung,
- FIG 6: eine spezielle Ausführungsform einer Achsaufnahme gemäß FIG 1 mit einer Rückstellvorrichtung,
- FIG 7: bis FIG 10 Einzelheiten einer speziellen Ausführungsform einer Achsaufnahme gemäß FIG 1 mit einem Betätigungsschutz und
- FIG 11: eine Achsaufnahme an einer Achse einer Luftklappe.

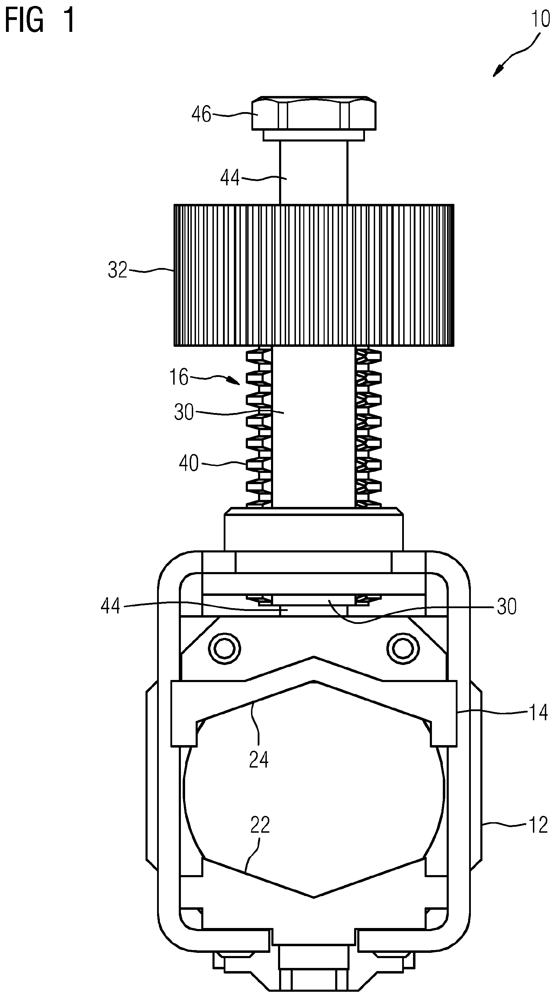

Die Darstellung in FIG 1 zeigt eine Ausführungsform einer erfindungsgemäßen Achsaufnahme 10. Eine Achsaufnahme 10 kann auch als Achsbefestigung oder als Achsadapter - oder im Englischen als shaft adapter - bezeichnet werden. Solche oder ähnliche Begriffe sind Synonyme. Hier und im Folgenden wird die Bezeichnung Achsaufnahme 10 verwendet.

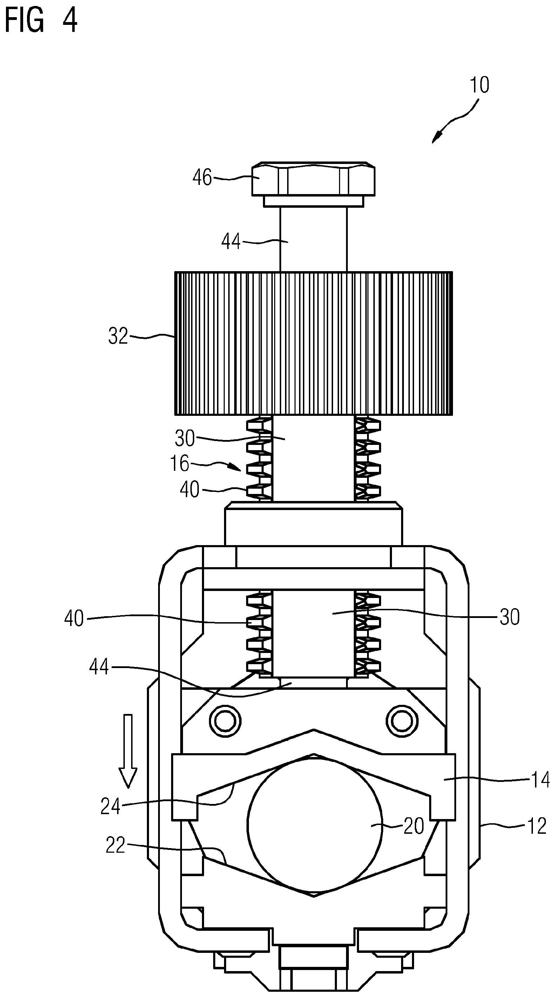

Achsaufnahmen 10 sind grundsätzlich an sich bekannt und zur Befestigung an einer drehbaren Achse 20 (FIG 4) bestimmt, insbesondere einer Achse einer Luftklappe oder dergleichen in einer Anlage für die Heizung, Lüftung oder Kühlung in einem Gebäude. Eine zur Befestigung an einer solchen Achse 20 einer Luftklappe oder dergleichen bestimmte Achsaufnahme 10 ist Teil einer als Luftklappendrehantrieb fungierenden Vorrichtung oder kommt als Teil einer solchen Vorrichtung in Betracht.

Die Achsaufnahme 10 umfasst mehrere Teile, die im Folgenden mitunter einzeln oder zusammen als Komponente bzw. Komponenten bezeichnet werden, nämlich einen Zugbügel 12, einen Druckbügel 14 und einen Druckbügelantrieb 16. Der Zugbügel 12 und der Druckbügel 14 weisen jeweils Klemmbacken 22, 24 mit einander zugewandten Griffseiten auf. Die Griffseiten der Klemmbacken 22, 24 sind bevorzugt V-förmig, so dass Achsen 20 mit unterschiedlichen Durchmessern gut erfasst werden. Der Zugbügel 12 schließt gehäuseartig einen Zwischenraum ein.

Der Druckbügel 14 ist im Zugbügel 12 und am Zugbügel 12 translatorisch beweglich. In einer ersten Bewegungsrichtung des Druckbügels 14 bewegen sich die beiden Klemmbacken 22, 24 aufeinander zu und eine zwischen den Klemmbacken 22, 24 befindliche Achse 20 wird schließlich mittels der Klemmbacken 22, 24 sowie der dortigen Griffflächen eingeklemmt. In einer entgegengesetzten zweiten Bewegungsrichtung des Druckbügels 14 bewegen sich die beiden Klemmbacken 22, 24 voneinander weg und eine ggf. zuvor mittels der Klemmbacken 22, 24 eingeklemmte Achse 20 wird freigegeben.

Der Druckbügel 14 ist im Zugbügel 12 und am Zugbügel 12 mittels des Druckbügelantriebs 16 translatorisch beweglich. Der Druckbügelantrieb 16 umfasst einen Triebschaft 30. Der Triebschaft 30 weist an einem Ende ein mit diesem konzentrisches Betätigungselement (oder: Handhabe) 32 zum Betätigen des Druckbügelantriebs 16 und zum Bewegen des Druckbügels 14 auf. Zur Aufnahme des Triebschafts 30 weist der Zugbügel 12 eine Triebschaftführung 34 auf.

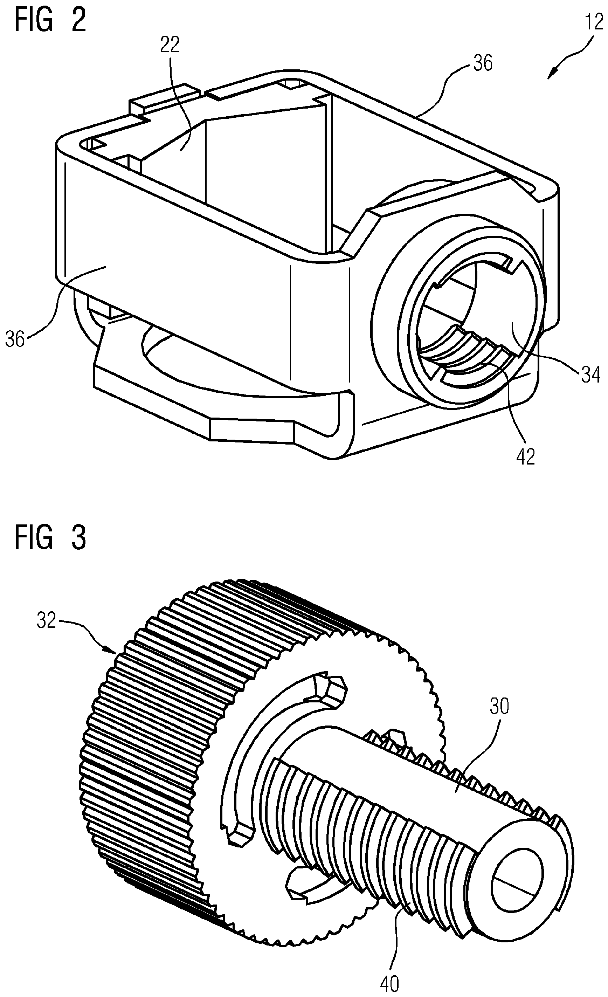

Die Darstellung in FIG 2 zeigt den Zugbügel 12 mit der Triebschaftführung 34 und die Darstellung in FIG 3 zeigt den Triebschaft 30 mit dem Betätigungselement 32 an dessen einem Ende. Die Triebschaftführung 34 liegt am Zugbügel 12 dem Klemmbacken 22 des Zugbügels 12 gegenüber. Zur Verbindung dieser beiden Seiten des Zugbügels 12 umfasst der Zugbügel 12 Verbindungsstege 36, die auch als Führung für den Druckbügel 14 fungieren und zusammen mit zwei einander gegenüberliegenden Außenseiten des Druckbügels 14 ein Gleitlager bilden.

Als Betätigungselement 32 fungiert bei der gezeigten Ausführungsform eine Art Handrad. Das im weitesten Sinne zylindrische Handrad ist mit dem Triebschaft 30 verbunden, insbesondere einstückig an den Triebschaft 30 angeformt, und weist einen im Vergleich zum Triebschaft 30 größeren Durchmesser auf, so dass das Handrad an seiner Außenoberfläche gut von einer Bedienperson mit der Hand ergriffen und gedreht werden kann. Bevorzugt ist die Außenoberfläche strukturiert, zum Beispiel - wie gezeigt - geriffelt, nämlich geriffelt in Form einer Außen-Längs-Riffelung.

Die Triebschaftführung 34 ist zur Aufnahme und Führung des Triebschafts 30 bestimmt und eingerichtet. Der Triebschaft 30 weist in seiner oder auf seiner Außenoberfläche eine Formschlusskontur 40 auf, zum Beispiel - wie gezeigt - eine Formschlusskontur 40 in Form von oder nach Art eines Sektorgewindes 40.

Der Begriff Sektorgewinde 40 wird im Weiteren - im Interesse einer besseren Lesbarkeit der hier vorgelegten Beschreibung, aber ohne Verzicht auf eine weitergehende Allgemeingültigkeit - zur Bezeichnung der Formschlusskontur 40 des Triebschafts 30 und mit derselben Bezugsziffer verwendet. Die allgemeinere Bezeichnung als Formschlusskontur 40 ist dabei stets mitzulesen.

Der Begriff Sektorgewinde 40 bezeichnet zuvorderst eine gewindeartige Riffelung, die anders als bei einem üblichen Gewinde, welches kontinuierlich und wendelartig/schraubenlinienförmig in einer zylindrischen Schaftaußenwand verläuft, gerade nicht kontinuierlich ist. Das Sektorgewinde 40 weist die gewindeartige Riffelung im Bereich zumindest eines Kreissektors auf, also zum Beispiel in einem Bereich von 90° des jeweiligen Schaftumfangs. Der Begriff Sektorgewinde 40 beinhaltet keine Beschränkung auf einen bestimmten Schaftumfang und die Nennung von 90° des Schaftumfangs ist ausdrücklich nur ein Beispiel.

Der Begriff Sektorgewinde 40 beinhaltet auch eine radiale, steigungsfreie Riffelung im Bereich eines Kreissektors, also zum Beispiel in einem Bereich von 90° des Schaftumfangs.

Für den Triebschaft 30 und ein dortiges Sektorgewinde 40 gilt entsprechend, dass der Triebschaft 30 das Sektorgewinde 40 zum Beispiel in einem Bereich von 90° des Triebschaftumfangs aufweist. Der Triebschaft 30 kann die das Sektorgewinde 40 bildende Riffelung in genau einem Kreissektor oder in mehreren Kreissektoren aufweisen, zum Beispiel zwei einander am Triebschaft 30 radial gegenüberliegenden Kreissektoren. Wesentlich ist, dass an einen Kreissektor mit Riffelung beidseitig eine Triebschaftoberfläche ohne Riffelung anschließt.

Anstelle einer Riffelung kann der Triebschaft 30 auch die Elemente eines Teils eines Bajonettverschlusses aufweisen. Ein Bajonettverschluss dient bekanntlich zur Verbindung zweier zylindrischer Abschnitte, von denen der erste einen Knopf und der zweite zur Aufnahme des Knopfs einen "L-Schlitz" aufweist, also eine Formation mit einem in axialer Richtung verlaufenden Längsschlitz und einem daran anschließenden und zumindest anfänglich davon etwa rechtwinklig ausgehenden Anschlussschlitz. Anstelle einer Riffelung kann der Triebschaft 30 also auch entweder zumindest einen Knopf oder zumindest einen L-Schlitz aufweisen und die Triebschaftführung 34 weist entsprechend zumindest einen L-Schlitz bzw. zumindest einen Knopf auf. Auch ein L-Schlitz oder ein Knopf befindet sich nur in einem bestimmten Bereich des Triebschaftumfangs und ein Verbinden zweier Teile mittels Bajonettverschluss erfordert eine gewindeartige Drehung, so dass sich auch hier die Bezeichnung als Sektorgewinde 40 rechtfertigt. Jedenfalls ist jedes hier beschriebene Beispiel für ein Sektorgewinde 40 eine Formschlusskontur 40, nämlich eine Formschlusskontur 40 in oder auf der Außenoberfläche des Triebschafts 30, und die Triebschaftführung 34 weist in oder auf ihrer Innenoberfläche eine zu deren formschlüssiger Aufnahme oder formschlüssiger Kontaktierung geeignete Formschlussgegenkontur 42 auf.

Als Formschlussgegenkontur 42 fungiert zum Beispiel ebenfalls ein Sektorgewinde 42 wie oben beschrieben. Wenn das Sektorgewinde 40 des Triebschafts 30 zum Beispiel 90° von dessen (Außen-)Umfang einnimmt, kann das Sektorgewinde 42 der Triebschaftführung 34 zum Beispiel 270° von dessen (Innen-)Umfang einnehmen; in der Praxis etwas weniger als 90° sowie etwas weniger als 270°. Für das Sektorgewinde 42 der Triebschaftführung 34 gilt das oben Geschriebene entsprechend (radiale schraubenlinienförmige Riffelung, radiale steigungsfreie Riffelung, Bajonettverschluss).

Bei der gezeigten Ausführungsform weist der Triebschaft 30 das Sektorgewinde 40 in zwei einander am Triebschaft 30 radial gegenüberliegenden Triebschaftumfangsbereichen von jeweils 90° (in der Praxis etwas weniger als 90°) auf und die Triebschaftführung 34 weist das Sektorgewinde 42 in zwei einander in der Triebschaftführung 34 radial gegenüberliegenden Triebschaftführungsumfangsbereichen von jeweils 90° (in der Praxis etwas weniger als 90°) auf. Bei zuvor außer Eingriff befindlichen Sektorgewinden 40, 42 bringt eine Vierteldrehung (eine Drehung im 90°) des Triebschafts 30 die Sektorgewinde 40, 42 vollflächig in Eingriff.

Die Formschlusskontur 40 des Triebschafts 30 und die Formschlussgegenkontur 42 der Triebschaftführung 34 erlauben ein schnelles Einspannen einer Achse 20 mittels der Klemmbacken 22, 24. Wenn die Formschlusskontur 40 und die Formschlussgegenkontur 42 durch eine entsprechende Drehung des Triebschafts 30 außer Eingriff sind, ist der Triebschaft 30 in der Triebschaftführung 34 axial beweglich. Diese Beweglichkeit ermöglicht einen Vorhub des Triebschaft 30 in der Triebschaftführung 34 und mit diesem Vorhub einen Vorhub des Druckbügels 14 und des Klemmbackens 24 am Druckbügel 14, bis dieser Klemmbacken 24 mit der Außenoberfläche der zu fixierenden Achse 20 in Kontakt kommt. Wenn nun durch eine Drehung des Triebschafts 30 die Formschlusskontur 40 des Triebschafts 30 und die Formschlussgegenkontur 42 der Triebschaftführung 34 miteinander in Eingriff gebracht werden, ist der Triebschaft 30 bei an der Außenoberfläche der Achse 20 anliegendem Klemmbacken 24 in der Triebschaftführung 34 axial fixiert. In dieser Konfiguration ist die Achsaufnahme 10 bereits anfänglich an der Achse 20 angebracht. Abhängig vom jeweiligen Umfang der Achse 20 und ebenso abhängig von der konkreten axialen Position des Triebschafts 30 nach dessen axialer Fixierung können die Klemmbacken 22, 24 dabei bereits unmittelbar an der Achsoberfläche anliegen oder noch von der Achsoberfläche beabstandet sein. Beides wird im Sinne einfacher Verhältnisse für die hier vorgelegte Beschreibung als Einklemmen der Achse mittels der Klemmbacken 22, 24 bezeichnet. Das finale Fixieren der Achse 20 wird nachfolgend beschrieben.

Bei einer herkömmlichen Fixierung mittels Gewindespindel muss der Vorhub des Druckbügels 14 und des dortigen Klemmbackens 24 durch mehrfache, oftmals vielfache Drehung der Gewindespindel erreicht werden. Mittels eines Triebschafts 30 und einer Triebschaftführung 34 mit Formschlusskontur 40 und Formschlussgegenkontur 42 wie hier beschrieben, kann dieser Vorhub durch eine schnelle lineare Bewegung des Triebschafts 30, nämlich eine axiale Bewegung Triebschafts 30, erreicht werden. Die Drehung des Triebschafts 30 beschränkt sich auf zwei Drehungen, die beide zusammen maximal eine Vollumdrehung bilden zum anfänglichen Außer-Eingriff-Bringen der Formschlusskontur 40 und der Formschlussgegenkontur 42 und zum finalen In-Eingriff-Bringen der Formschlusskontur 40 und Formschlussgegenkontur 42.

Diese Mechanik ist grundsätzlich unter einem Begriff wie zum Beispiel "Schnellspannvorrichtung" bekannt und die hier vorgeschlagene Achsaufnahme 10 zeichnet sich aufgrund des Triebschafts 30, der Triebschaftführung 34 und der dortigen Formschlusskontur 40 bzw. Formschlussgegenkontur 42 durch eine Schnellspannvorrichtung aus.

Der Druckbügelantrieb 16 umfasst auch eine Feststellschraube 44. Die Feststellschraube 44 weist einen langgestreckten Schaft und an einem Ende des Schafts einen Kopf 46 mit einer Betätigungskontur, zum Beispiel einer Betätigungskontur in Form eines Innensechskants, Außensechskants oder dergleichen auf. Die Feststellschraube 44 weist auf ihrem Schaft ein Außengewinde auf. Der Triebschaft 30 weist eine zentrale, durchgehende Axialbohrung/Axialausnehmung mit einem zum Außengewinde der Feststellschraube 44 passenden Innengewinde auf. Der Triebschaft 30 nimmt die Feststellschraube 44 auf; die Feststellschraube 44 läuft konzentrisch mit dem Triebschaft 30 im Triebschaft 30. Mit anderen Worten: Die Feststellschraube 44 ist/wird in den Triebschaft 30 eingeschraubt. Die Feststellschraube 44 trägt mit ihrem ihrem Kopf gegenüberliegenden Ende den Druckbügel 14 und indem die Feststellschraube 44 in den Triebschaft 30 eingeschraubt ist, trägt - zumindest mittelbar - auch der Triebschaft 30 den Druckbügel 14.

Die Bewegung des Druckbügels 14 mittels des Triebschafts 30 und das zumindest anfängliche Einspannen einer Achse 20 zwischen Zug- und Druckbügel 12, 14 wurde bereits beschrieben (Schnellspannvorrichtung). Das finale Einspannen der Achse 20 erfolgt mittels der Feststellschraube 44 und die Bewegung des Druckbügels 14 mittels der Feststellschraube 44 entspricht einem grundsätzlich an sich bekannten Spindelantrieb. Eine Richtung, bei der sich die Klemmbacken 22, 24 aufeinander zu bewegen, wird als Einspannrichtung bezeichnet; zum Einspannen einer Achse 20 bewegt sich der Druckbügel 14 in die Einspannrichtung. Die der Einspannrichtung entgegengesetzte Bewegungsrichtung wird als Gegenrichtung bezeichnet: beim Lösen einer zuvor eingespannten Achse 20 bewegt sich der Druckbügel 14 in die Gegenrichtung.

Die Darstellung in FIG 4 zeigt eine mittels der Achsaufnahme 10 fixierte Achse 20. Die Achse 20 ist zwischen dem Zugbügel 12 und dem Druckbügel 14 und den jeweiligen Klemmbacken 22, 24 eingeklemmt.

Im Vergleich zu der Darstellung in FIG 1 und der dort gezeigten Situation erkennt man in der Darstellung in FIG 4 den in Einspannrichtung bewegten Druckbügel 14. Diese Bewegung des Druckbügels 14 ist mittels des Druckbügelantriebs 16 erfolgt, nämlich durch eine axiale Bewegung ("Schieben") des Triebschafts 30 in der Triebschaftführung 34 und durch die Triebschaftführung 34. Für diese axiale Bewegung sind die Formschlusskontur 40 am Triebschaft 30 und die Formschlussgegenkontur 42 in der Triebschaftführung 34 außer Eingriff. In der Darstellung in FIG 4 ist gut auch der im Zugbügel 12 zurückgelegte Weg des Druckbügels 14 erkennbar. Dieser Weg war aufgrund der Schnellspannvorrichtung ohne eine Drehung des Druckbügelantriebs 16 möglich. Die finale Fixierung der Achse 20 erfolgt mittels der Feststellschraube 44 und durch Drehen der Feststellschraube 44. Die Drehung der Feststellschraube 44 erfolgt in dem Triebschaft 30. Dafür ist der Triebschaft 30 in der Triebschaftführung 34 axial fixiert. Dies wiederum wird erreicht, indem die Formschlusskontur 40 am Triebschaft 30 und die Formschlussgegenkontur 42 in der Triebschaftführung 34 miteinander in Eingriff gebracht werden (durch Drehung des Triebschafts 30 mittels des Betätigungselements 32) und schließlich in Eingriff sind.

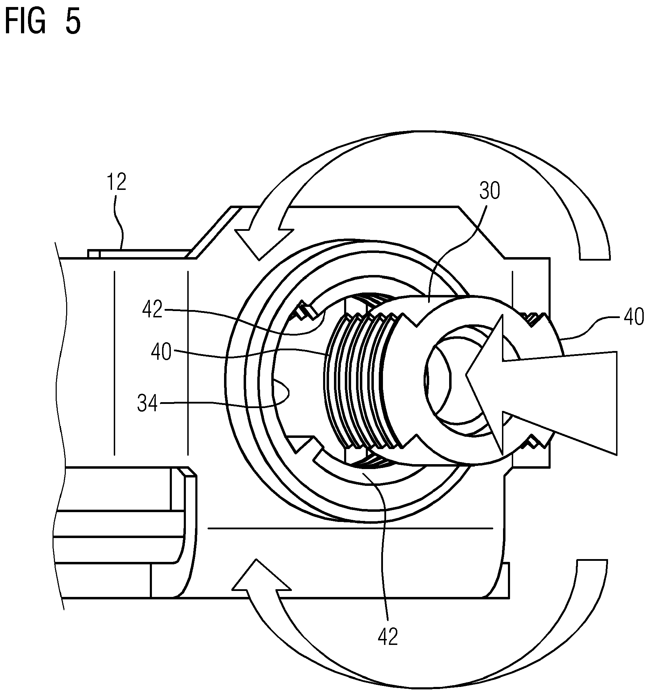

Die Darstellung in FIG 5 zeigt zur nochmaligen Erläuterung des Schnellspannvorgangs den Zugbügel 12 mit Blick auf die dortige Triebschaftführung 34 sowie fluchtend mit der Triebschaftführung 34 und vor der Triebschaftführung 34 einen Abschnitt des Triebschafts 30. In der gezeigten Rotationslage des Triebschafts 30 lässt sich dieser erkennbar in die Triebschaftführung 34 einführen und ist im in die Triebschaftführung 34 eingeführten Zustand axial beweglich (gezeigt durch den in axialer Richtung des Triebschafts 30 weisenden Blockpfeil), denn die Formschlusskontur 40 am Triebschaft 30 und die Formschlussgegenkontur 42 in der Triebschaftführung 34 sind und bleiben außer Eingriff. Zur axialen Fixierung des Triebschafts 30 in der Triebschaftführung 34 erfolgt eine Drehung des Triebschafts 30, bis die Formschlusskontur 40 am Triebschaft 30 und die Formschlussgegenkontur 42 in der Triebschaftführung 34 miteinander in Eingriff sind, insbesondere vollflächig miteinander in Eingriff sind. Zur Aufhebung der axialen Fixierung erfolgt zum Beispiel eine Drehung in Gegenrichtung, so lange bis die Formschlusskontur 40 am Triebschaft 30 und die Formschlussgegenkontur 42 in der Triebschaftführung 34 außer Eingriff sind. Die beiden Drehungen zur axialen Fixierung des Triebschafts 30 und zur Aufhebung der axialen Fixierung sind in der Darstellung in FIG 5 mittels der beiden weiteren Blockpfeile gezeigt. Die Drehrichtungen hängen von der jeweiligen Ausführungsform der Formschlusskontur 40 und der Formschlussgegenkontur 42 ab. Bei einer Riffelung mit einer Steigung erfolgen die Fixierung mittels einer Drehung in eine erste Richtung und die Aufhebung der Fixierung durch eine Drehung in Gegenrichtung. Bei einer Riffelung ohne Steigung kann die Fixierung ebenfalls durch eine Drehung in Gegenrichtung aufgehoben werden, aber auch durch ein Weiterdrehen in der ersten Richtung. Bei einer Formschlusskontur 40 und Formschlussgegenkontur 42 entsprechend einem Bajonettverschluss ist zur Aufhebung der Fixierung nur eine Drehung in Gegenrichtung möglich.

In der Darstellung in FIG 5 ist auch die zentrale, axiale Bohrung im Triebschaft 30 erkennbar, welche die Feststellschraube 44 aufnimmt.

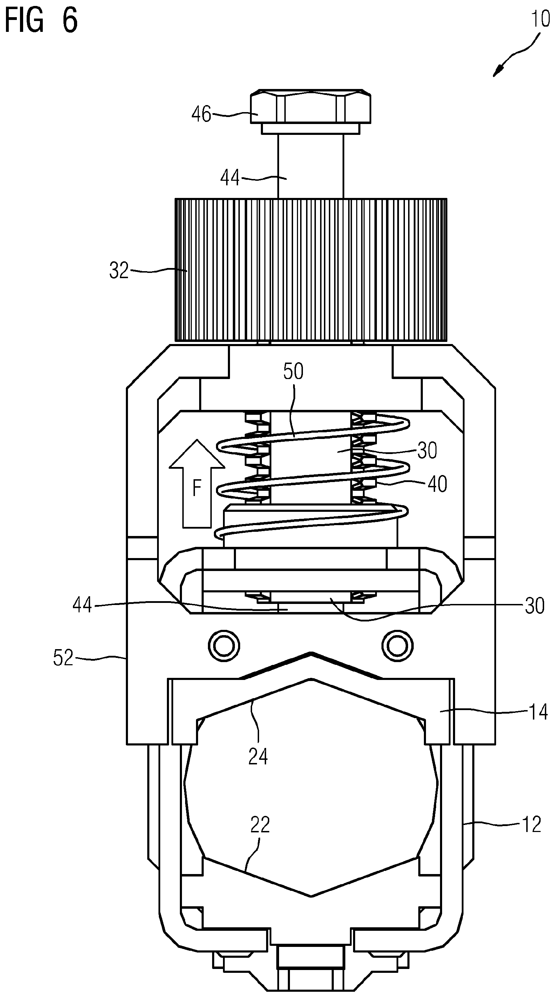

Die Darstellung in FIG 6 zeigt eine Ausführungsform der Achsaufnahme 10 mit einer optionalen Rückstellvorrichtung. Wie bisher beschrieben, wird der Schnellspannvorgang aufgrund der axialen Beweglichkeit des Triebschafts 30 in der Triebschaftführung 34 ermöglicht, sofern die Formschlusskontur 40 am Triebschaft 30 und die Formschlussgegenkontur 42 in der Triebschaftführung 34 außer Eingriff sind. Für eine tatsächliche axiale Bewegung des Triebschafts 30 und den damit einhergehenden Vor- und Rückhub des Druckbügels 14 ist ein aktives Schieben bzw. Ziehen des Triebschafts 30 durch die jeweilige Bedienperson erforderlich. Bei der in der Darstellung in FIG 6 gezeigten Ausführungsform der Achsaufnahme 10 mit Rückstellvorrichtung erfolgen der Rückhub des Druckbügels 14 und die dafür notwenige axiale Verschiebung des Triebschafts 30 in der Triebschaftführung 34 selbsttätig, sobald die Formschlusskontur 40 und die Formschlussgegenkontur 42 außer Eingriff sind.

Die Rückstellvorrichtung umfasst zumindest ein Federelement 50, zum Beispiel - wie gezeigt - eine Spiralfeder 50. Die Spiralfeder 50 liegt konzentrisch mit dem Triebschaft 30 um den Triebschaft 30 und liegt mit einem Ende außen am Zugbügel 12 und mit dem gegenüberliegenden Ende zum Beispiel an der Unterseite des Betätigungselements 32 an. Die Spiralfeder 50 spannt das Betätigungselement 32 und damit den Triebschaft 30 gegen den Zugbügel 12. Ohne eine Fixierung des Triebschafts 30 im Zugbügel 12 (in der dortigen Triebschaftführung 34) und ohne Einwirkung einer äußeren Kraft drückt die Spiralfeder 50 das Betätigungselement 32 nach außen und bewirkt damit einen Rückhub des Druckbügels 14. Alternativ kommen als Rückstellvorrichtung auch zwei Spiralfedern (nicht gezeigt) im Innenraum des Zugbügels 12 zwischen den Klemmbacken 22, 24 von Zug- und Druckbügel 12, 14 in Betracht. Solche Spiralfedern wirken in dieselbe Richtung wie die in FIG 6 gezeigte Spiralfeder 50 und sind zum Beispiel auf jeweils an den äußeren Enden der Klemmbacken 22, 24 vorgesehenen Kegeln oder Dornen platziert.

Bei der in FIG 6 gezeigten Ausführungsform umfasst die Rückstellvorrichtung zusätzlich noch einen Federkäfig 52. Dieser umschließt einen Teil des Druckbügels 14 und ist entlang des Druckbügels 14 translatorisch beweglich, wobei die jeweiligen Abschnitte des Druckbügels 14 und des Federkäfigs 52 gleitlagerartig zusammenwirken. Der Federkäfig 52 ist lösbar mit dem Druckbügel 14 verbunden, zum Beispiel - wie gezeigt - mittels eines oder zweier Zapfen am Druckbügel 14, der bzw. die von korrespondierenden Ausnehmungen im Federkäfig 52 aufgenommen werden. Der Federkäfig 52 umschließt auch den Triebschaft 30 und weist dafür eine Bohrung oder Ausnehmung auf, durch welche der Triebschaft 30 hindurchreicht. Die Spiralfeder 50 stützt sich im Falle eines Federkäfigs 52 nicht mehr - wie weiter oben erwähnt - an der Unterseite des Betätigungselements 32 und innen am Federkäfig 52 ab. Die Spiralfeder 50 stützt sich nun einerseits außen am Zugbügel 12 und andererseits innen am Federkäfig 52 ab. Die Spiralfeder 50 spannt den Federkäfig 52 und damit den Triebschaft 30 gegen den Zugbügel 12. Ohne eine Fixierung des Triebschafts 30 im Zugbügel 12 (in der dortigen Triebschaftführung 34) und ohne Einwirkung einer äußeren Kraft drückt die Spiralfeder 50 den Federkäfig 52 nach außen und bewirkt damit einen Rückhub des Druckbügels 14.

Im Falle eines Federkäfigs 52 sowie im Falle eines am Federkäfig 52 angebrachten/anbringbaren Druckbügels 14 entfällt die Notwendigkeit einer Halterung des Druckbügels 14 am Ende der Feststellschraube 44. Zum Fixieren einer Achse 20 ist es dann ausreichend, wenn die Feststellschraube 44 auf den Druckbügel 14 wirkt, also beim Fixieren einer Achse 20 mit ihrem Schaftende auf den Druckbügel 14 trifft.

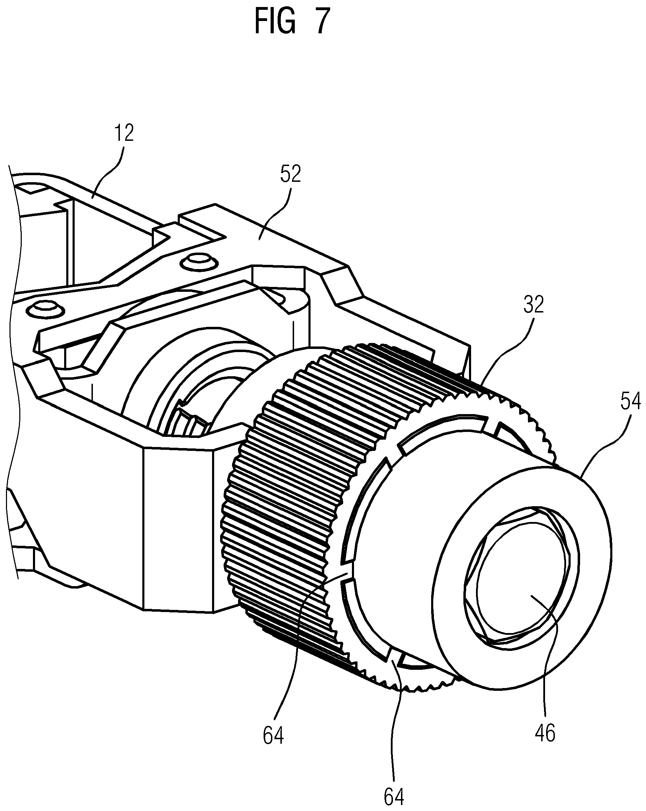

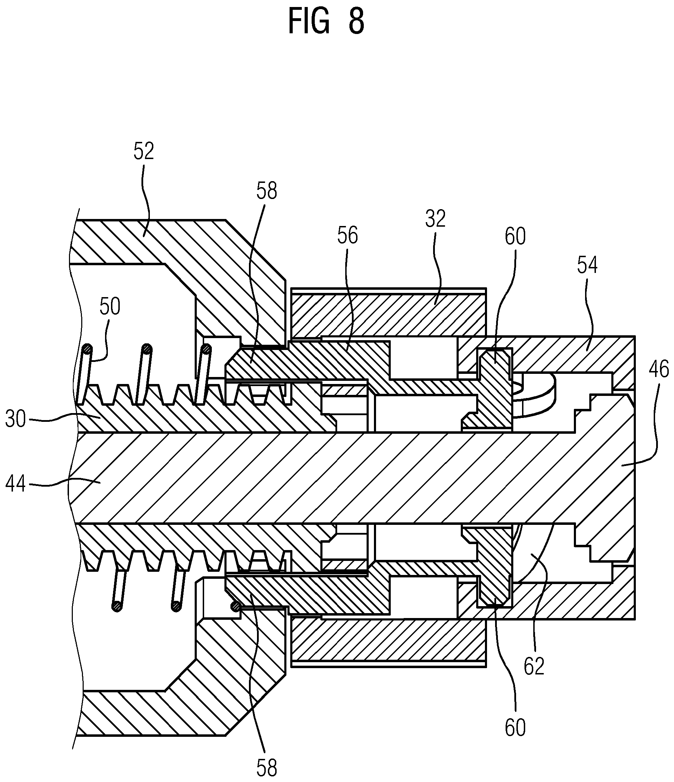

Die Darstellungen in FIG 7 und FIG 8 zeigen eine Ausführungsform der Achsaufnahme 10 mit der optionalen Rückstellvorrichtung und mit einem optionalen Betätigungsschutz, wobei als Betätigungsschutz ein Schutzkragen 54 um den Kopf 46 der Feststellschraube 44 fungiert. Die Darstellung in FIG 7 zeigt eine isometrische Ansicht eines Teils der Achsaufnahme 10 mit Blick auf den Kopf 46 der Feststellschraube 44, das Betätigungselement 32 des Triebschafts 30 sowie - in dieser Blickrichtung daran anschließend - den Federkäfig 52 und den Zugbügel 12. Die Darstellung in FIG 8 zeigt einen Längsschnitt durch in etwa den in FIG 7 gezeigten Bereich der Achsaufnahme 10 mit einer Schnittebene entlang der Längsachse des Triebschafts 30 (oder der im Triebschaft 30 laufenden Feststellschraube 44).

Der Schutzkragen 54 ist beweglich mit einer Schutzkragenbasis 56 verbunden. Die Schutzkragenbasis 56 wird von dem im weitesten Sinne topfförmigen (zylindermantelförmig, einseitig/oben offen) Betätigungselement 32 aufgenommen und der Schutzkragen 54 wird je nach axialer Position zumindest teilweise vom Betätigungselement 32 aufgenommen. Die Schutzkragenbasis 56 reicht mit zumindest einer fußartigen Abstellung (Fuß 58) durch einen Boden des Betätigungselements 32 hindurch bis in den Bereich des Federkäfigs 52. Vorteilhaft ist die Schutzkragenbasis 56 axial fixiert, indem der oder jeder Fuß 58 mit dem Federkäfig 52 verrastet ist, insbesondere indem das freie Ende des oder jedes Fußes 58 oder zumindest eines Fußes 58 eine Rastkontur aufweist, zum Beispiel eine Rastnase oder einen Schnapper, und mit der Rastkontur einen Abschnitt der zur Aufnahme des jeweiligen Fußes 58 vorgesehenen Ausnehmung im Federkäfig 52 kontaktiert. Mittels des oder jedes Fußes 58 stützt sich die Schutzkragenbasis 56 am Federkäfig 52 ab, so dass bei einer Drehung des Betätigungselements 32 die Schutzkragenbasis 56 nicht ebenfalls rotiert (die Rotationslage der Schutzkragenbasis 56 bleibt auch bei einer Drehung des Betätigungselements 32 gleich).

Die Schutzkragenbasis 56 endet an der der Seite mit dem zumindest einen Fuß 58 gegenüberliegenden Seite in zumindest einer zapfenartigen, radial nach außen weisenden Abstellung 60, vorteilhaft in zwei oder mehr solchen gleichmäßig entlang der dortigen Umfangslinie verteilten Abstellungen 60. Im Bereich der oder jeder Abstellung 60 schließt ein dortiger Abschnitt der Schutzkragenbasis 56 ringförmig an die Feststellschraube 44 an (ohne Berührung der Außenoberfläche der Feststellschraube 44, zumindest ohne allseitige Berührung der Außenoberfläche der Feststellschraube 44).

Der im weitesten Sinne zylindermantelförmige Schutzkragen 54 weist in seiner Innenoberfläche entsprechend der Anzahl der Abstellungen 60 ein oder mehrere Führungskulissen 62, zum Beispiel rinnenförmige Führungskulissen 62 auf. Die oder jede Abstellung 60 läuft in jeweils einer Führungskulisse 62 (die oder jede Abstellung 60 kann daher auch als Kulissenstein 60 angesprochen werden). Die oder jede Führungskulisse 62 verläuft schraubenlinienförmig in der Innenoberfläche des Schutzkragens 54.

Der Schutzkragen 54 ist mit dem Betätigungselement 32 drehfest, aber relativ zum Betätigungselement 32 axial beweglich verbunden. Drehfest meint, dass eine Drehung des Betätigungselements 32 zu einer ebensolchen Drehung des Schutzkragens 54 führt. Bei der gezeigten Ausführungsform ist diese drehfeste, aber axial bewegliche Verbindung mittels einer Mehrzahl von Nut-Feder-Formschlüssen (Nut-Feder-Führungen) realisiert, wobei denkbar ist, dies auf genau einen Nut-Feder-Formschluss zu reduzieren. Bei der gezeigten Ausführungsform weist der Schutzkragen 54 die entsprechenden Nute und das Betätigungselement 32 zum formschlüssigen Eingriff in die Nute bestimmte Rippen (Federn) 64 auf.

Damit ist festzuhalten, dass die Schutzkragenbasis 56 bei einer Drehung des Betätigungselements 32 nicht mitdreht und der Schutzkragen 54 bei einer Drehung des Betätigungselements 32 mitdreht. Dies und die Verbindung von Schutzkragenbasis 56 und Schutzkragen 54 sowie die axiale Beweglichkeit des Schutzkragens 54 bei einer Drehung des Betätigungselements 32 führen dazu, dass bei einer Drehung des Betätigungselements 32 ein Zurückziehen des Schutzkragens 54 in das topfförmige Betätigungselement 32 resultiert.

Dieses Zurückziehen des Schutzkragens 54 soll jetzt zum besseren Verständnis noch mit weiteren Details betrachtet werden. Beim Drehen des Betätigungselements 32 bleibt die Orientierung (Rotationslage) des oder jedes Kulissensteins 60 erhalten, denn die Schutzkragenbasis 56 dreht sich nicht. Beim Drehen des Betätigungselements 32 wird der Schutzkragen 54 mitgedreht und die resultierende Drehung des Schutzkragens 54 führt dazu, dass die oder jede Führungskulisse 62 gewissermaßen über den jeweiligen Kulissenstein 60 spiralförmig abgleitet und die Bewegung des oder jedes Kulissensteins 60 entlang der jeweiligen Führungskulisse 62 führt dazu, dass der Schutzkragen 54 zurückgezogen wird.

Beim Zurückziehen gibt der Schutzkragen 54 den Kopf 46 der Feststellschraube 44 und eine dortige Betätigungskontur, nämlich eine Betätigungskontur in Form eines Außensechskants oder dergleichen, frei. Nun kann ein Werkzeug an der Betätigungskontur angesetzt werden und die Feststellschraube 44 kann zum finalen Fixieren einer zwischen den Klemmbacken 22, 24 eingeklemmten Achse 20 festgezogen werden.

Nun muss abschließend noch betrachtet werden, wann das beschriebene Zurückziehen des Schutzkragens 54 aufgrund einer Drehung des Betätigungselements 32 erfolgt. Mittels des Betätigungselements 32 wird der Triebschaft 30 gedreht und eine Drehung des Triebschafts 30 bringt die Formschlusskontur 40 am Triebschaft 30 und die Formschlussgegenkontur 42 in der Triebschaftführung 34 miteinander in Eingriff oder außer Eingriff. Das Zurückziehen des Schutzkragens 54 aufgrund einer Drehung des Betätigungselements 32 erfolgt demnach, wenn durch die Drehung des Betätigungselements 32 die Formschlusskontur 40 und die Formschlussgegenkontur 42 miteinander in Eingriff gebracht werden. Der Schutzkragen 54 ist maximal zurückgezogen, wenn die Formschlusskontur 40 und die Formschlussgegenkontur 42 vollflächig miteinander in Eingriff sind. Umgekehrt wird der Schutzkragen 54 in Gegenrichtung bewegt, also gewissermaßen ausgefahren, nämlich in eine Betätigungsschutzstellung ausgefahren, wenn die Formschlusskontur 40 und die Formschlussgegenkontur 42 durch eine entsprechende Drehung des Betätigungselements 32 außer Eingriff gebracht werden und der Schutzkragen 54 ist maximal ausgefahren, wenn die Formschlusskontur 40 und die Formschlussgegenkontur 42 außer Eingriff sind. Im ausgefahrenen Zustand verhindert der Schutzkragen 54 eine Betätigung des Kopfs 46 der Feststellschraube 44 mit einem Werkzeug. Damit rechtfertigt sich eine Bezeichnung des ausgefahrenen Zustands als Betätigungsschutzstellung. Ein Festziehen der Feststellschraube 44 ist damit nur dann möglich, wenn die Formschlusskontur 40 und die Formschlussgegenkontur 42 in Eingriff sind und damit der Triebschaft 30 axial fixiert ist.

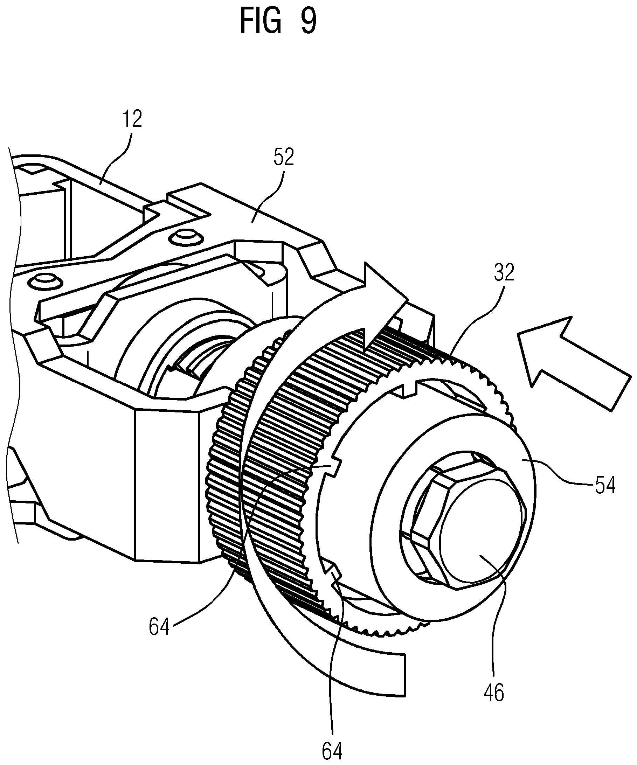

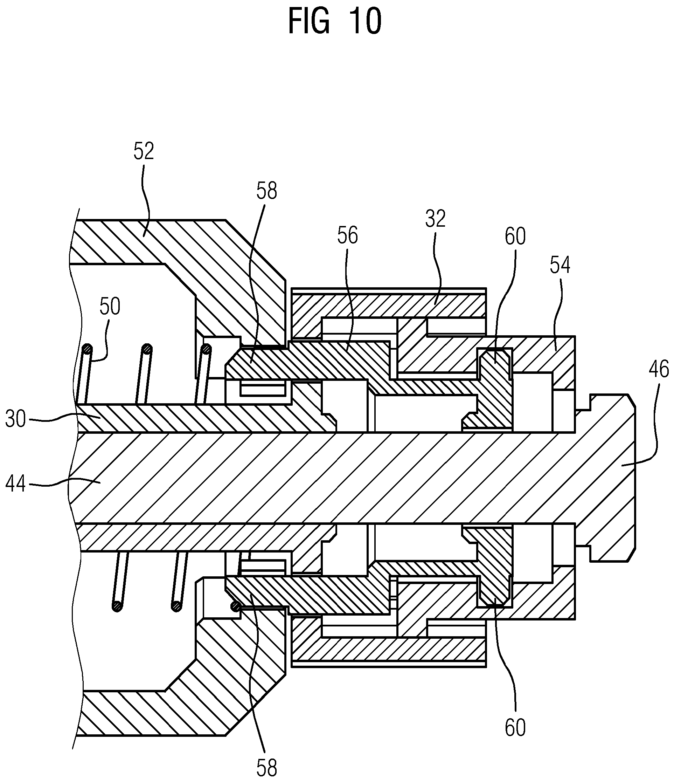

Die Darstellungen in FIG 7 und FIG 8 zeigen den Schutzkragen 54 in maximal ausgefahrenem Zustand. Die Darstellungen in FIG 9 und FIG 10 zeigen - in gleicher Ansicht wie die Darstellungen in FIG 7 bzw. FIG 8 - den Schutzkragen 54 in maximal zurückgezogenem Zustand.

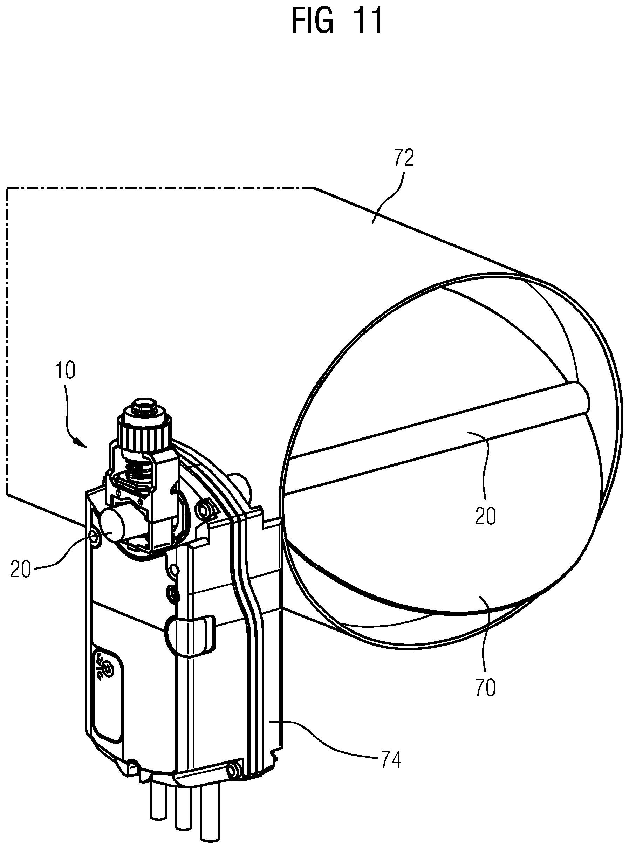

Die Darstellung in FIG 11 zeigt schließlich eine Achsaufnahme 10 der hier vorgeschlagenen Art - beispielhaft mit der optionalen Rückstelleinrichtung, mit dem optionalen Federkäfig 52 und mit dem optionalen Schutzkragen 54 - in einer zum Öffnen oder Schließen einer Luftklappe 70 vorgesehenen Konfiguration. Die Luftklappe 70 befindet sich in einer Rohrleitung, zum Beispiel einem Lüftungsrohr 72. Die Luftklappe 70 ist in an sich bekannter Art und Weise mit einer Achse 20 verbunden und ist mittels der Achse 20 drehbar. Die Achse 20 ist mittels der Achsaufnahme 10 eingespannt und eine Drehung der Achsaufnahme 10 bewirkt eine Drehung der Achse 20 und damit eine Drehung der Luftklappe 70. Die Drehung der Achsaufnahme 10 erfolgt in an sich bekannter Art und Weise mittels eines dafür vorgesehenen Antriebs (Luftklappendrehantrieb) 74, insbesondere eines Antriebs 74 in Form eines Stellantriebs. Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung gemäß den angehängten Ansprüchen zu verlassen.

Einzelne im Vordergrund stehende Aspekte der hier eingereichten Beschreibung lassen sich damit kurz wie folgt zusammenfassen: Angegeben wird eine zur Fixierung an einer Achse 20, insbesondere einer Achse 20 einer Luftklappe 70, bestimmte Achsaufnahme 10, welche einen Zugbügel 12 und einen mittels eines Triebschafts 30 relativ zum Zugbügel 12 beweglichen Druckbügel 14 umfasst, wobei der Triebschaft 30 in einer Triebschaftführung 34 im Zugbügel 12 geführt ist, und die sich dadurch auszeichnet, dass der Triebschaft 30 und die Triebschaftführung 34 als Schnellspannvorrichtung fungieren. Angegeben werden schließlich auch ein Luftklappendrehantrieb 74 mit einer solchen Achsaufnahme 10 und die Verwendung einer solchen Achsaufnahme 10 zum Fixieren einer Achse 20 einer Luftklappe 70.

### Bezugszeichenliste

- 10: Achsaufnahme
- 12: Zugbügel
- 14: Druckbügel
- 16: Druckbügelantrieb
- 18: (frei)
- 20: Achse
- 22: Klemmbacken
- 24: Klemmbacken
- 26, 28: (frei)
- 30: Triebschaft
- 32: Betätigungselement
- 34: Triebschaftführung, Führung
- 36: Verbindungssteg
- 38: (frei)
- 40: Formschlusskontur, Sektorgewinde
- 42: Formschlussgegenkontur, Sektorgewinde
- 44: Feststellschraube
- 46: Kopf (der Feststellschraube)
- 48: (frei)
- 50: Federelement, Spiralfeder
- 52: Federkäfig
- 54: Schutzkragen
- 56: Schutzkragenbasis
- 58: Fuß (fußartige Abstellung an der Schutzkragenbasis)
- 60: Abstellung, Kulissenstein
- 62: Führungskulisse
- 64: Rippe
- 66, 68: (frei)
- 70: Luftklappe
- 72: Lüftungsrohr
- 74: Antrieb, Luftklappendrehantrieb

## Patentansprüche

1. Achsaufnahme (10) zur Fixierung an einer Achse (20), insbesondere einer Achse (20) einer Luftklappe (70), umfassend einen Zugbügel (12) und einen mittels eines Triebschafts (30) relativ zum Zugbügel (12) beweglichen Druckbügel (14), wobei der Triebschaft (30) in einer Triebschaftführung (34) im Zugbügel (12) geführt ist, und wobei der Triebschaft (30) und die Triebschaftführung (34) als Schnellspannvorrichtung fungieren, indem der Triebschaft (30) in oder auf dessen Außenoberfläche eine Formschlusskontur (40) und die Triebschaftführung (34) in oder auf deren Innenoberfläche eine Formschlussgegenkontur (42) aufweisen, wobei die Formschlusskontur (40) und die Formschlussgegenkontur (42) durch Drehung des Triebschafts (30) miteinander in Eingriff bringbar sind und dadurch der Triebschaft (30) in der Triebschaftführung (34) axial fixierbar ist, **dadurch gekennzeichnet , dass** als Formschlusskontur (40) und Formschlussgegenkontur (42) Sektorgewinde (40, 42) fungieren.

2. Achsaufnahme (10) nach Anspruch 1, wobei die Formschlusskontur (40) und die Formschlussgegenkontur (42) das Sektorgewinde (40, 42) jeweils zumindest in einem Bereich von 90° des Triebschaftumfangs und 90° des Umfangs der Triebschaftführung (34) aufweisen.

3. Achsaufnahme (10) nach Anspruch 2,
- wobei der Triebschaft (30) das Sektorgewinde (40) in zwei einander am Triebschaft (30) radial gegenüberliegenden Triebschaftumfangsbereichen von jeweils 90° aufweist, und
- wobei die Triebschaftführung (34) das Sektorgewinde (42) in zwei einander in der Triebschaftführung (34) radial gegenüberliegenden Triebschaftführungsumfangsbereichen von jeweils 90° aufweist.

4. Achsaufnahme (10) nach einem der vorangehenden Ansprüche, mit einer konzentrisch mit dem Triebschaft (30) im Triebschaft (30) laufenden Feststellschraube (44).

5. Achsaufnahme (10) nach einem der Ansprüche 1 bis 4,
mit einer Rückstellvorrichtung zur selbsttätigen Auslösung eines Rückhubs des Druckbügels (14), wenn die Formschlusskontur (40) und die Formschlussgegenkontur (42) außer Eingriff sind.

6. Achsaufnahme (10) nach Anspruch 5,
- wobei die Rückstellvorrichtung eine Spiralfeder (50) und einen Federkäfig (52) umfasst,
- wobei der Druckbügel (14) am Federkäfig (52) angebracht ist,
- wobei sich die Spiralfeder (50) einerseits außen am Zugbügel (12) und andererseits innen am Federkäfig (52) abstützt und
- wobei mittels der Spiralfeder (50) und des Federkäfigs (52) ein Rückhub des Druckbügels (14) auslösbar ist, wenn die Formschlusskontur (40) und die Formschlussgegenkontur (42) außer Eingriff sind.

7. Achsaufnahme (10) nach einem der Ansprüche 1 bis 6, mit einem beweglichen Betätigungsschutz, welcher dann wirksam ist, wenn die Formschlusskontur (40) und die Formschlussgegenkontur (42) außer Eingriff sind.

8. Achsaufnahme (10) nach Anspruch 7, wobei als Betätigungsschutz ein teleskopierbarer Schutzkragen (54) fungiert, welcher in ein zum Drehen des Triebschafts (30) bestimmtes Betätigungselement (32) zurückziehbar ist, wenn durch entsprechende Drehung des Triebschafts (30) die Formschlusskontur (40) und die Formschlussgegenkontur (42) in Eingriff sind und welcher in die Betätigungsschutzstellung ausgefahren ist, wenn die Formschlusskontur (40) und die Formschlussgegenkontur (42) außer Eingriff sind.

9. Achsaufnahme (10) nach Anspruch 8,
- wobei zur teleskopierbaren Beweglichkeit des Schutzkragens (54) dieser in seiner Innenoberfläche zumindest eine schraubenlinienförmige Führungskulisse (62) aufweist, in welcher ein Kulissenstein (60) einer Schutzkragenbasis (56) läuft,
- wobei der Schutzkragen (54) mit dem Betätigungselement (32) drehbar ist und die Schutzkragenbasis (56) bei einer Drehung des Betätigungselements (32) nicht mitdreht.

10. Luftklappendrehantrieb (74) mit einer Achsaufnahme (10) nach einem der Ansprüche 1 bis 9.

11. Verwendung einer Achsaufnahme (10) nach einem der Ansprüche 1 bis 9 zum Fixieren einer Achse (20) einer Luftklappe (70).

## Claims

1. Shaft adapter (10) for fixing to a shaft (20), in particular a shaft (20) of an air flap (70), comprising a tension bracket (12) and a compression bracket (14) that can be moved by means of a drive shaft (30) relative to the tension bracket (12), wherein the drive shaft (30) is guided in a drive shaft guide (34) in the tension bracket (12), and wherein the drive shaft (30) and the drive shaft guide (34) function as a quick-action clamping apparatus in that the drive shaft (30) has a form-fitting contour (40) in or on its outer surface and the drive shaft guide (34) has a form-fitting mating contour (42) in or on its inner surface, wherein the form-fitting contour (40) and the form-fitting mating contour (42) can be brought into engagement with one another by rotating the drive shaft (30) and, as a result, the drive shaft (30) can be axially fixed in the drive shaft guide (34), **characterised in that** sector threads (40, 42) function as the form-fitting contour (40) and form-fitting mating contour (42).

2. Shaft adapter (10) according to claim 1, wherein the form-fitting contour (40) and the form-fitting mating contour (42) in each case have the sector thread (40, 42) at least in a region of 90° of the drive shaft circumference and 90° of the circumference of the drive shaft guide (34).

3. Shaft adapter (10) according to claim 2,
- wherein the drive shaft (30) has the sector thread (40) in two drive shaft circumferential regions of 90° in each case that are radially opposite one another on the drive shaft (30), and
- wherein the drive shaft guide (34) has the sector thread (42) in two shaft guide circumference regions of 90° in each case that are radially opposite one another in the drive shaft guide (34).

4. Shaft adapter (10) according to one of the preceding claims, with a locking screw (44) running concentrically with the drive shaft (30) in the drive shaft (30).

5. Shaft adapter (10) according to one of claims 1 to 4, with a resetting apparatus for automatically triggering a return stroke of the compression bracket (14) when the form-fitting contour (40) and the form-fitting mating contour (42) are out of engagement.

6. Shaft adapter (10) according to claim 5,
- wherein the resetting apparatus comprises a spiral spring (50) and a spring cage (52),
- wherein the compression bracket (14) is attached to the spring cage (52),
- wherein the spiral spring (50) is supported, on the one hand, on the outside of the tension bracket (12) and, on the other, on the inside of the spring cage (52) and
- wherein a return stroke of the compression bracket (14) can be triggered by means of the spiral spring (50) and the spring cage (52) when the form-fitting contour (40) and the form-fitting mating contour (42) are out of engagement.

7. Shaft adapter (10) according to one of claims 1 to 6, with movable actuation protection which is effective when the form-fitting contour (40) and the form-fitting mating contour (42) are out of engagement.

8. Shaft adapter (10) according to claim 7, wherein a telescopic protective shroud (54) functions as actuation protection, said telescopic protective shroud can be retracted into an actuating element (32) intended for rotating the drive shaft (30) when corresponding rotation of the drive shaft (30) causes the form-fitting contour (40) and the form-fitting mating contour (42) to enter into engagement and is extended into the actuation protection position when the form-fitting contour (40) and the form-fitting mating contour (42) are out of engagement.

9. Shaft adapter (10) according to claim 8,
- wherein, for the telescopic mobility of the protective shroud (54), the protective shroud has at least one helical guide link (62) in its inner surface in which guide link (62) a link block (60) of a base of a protective shroud (56) runs,
- wherein the protective shroud (54) can be rotated with the actuating element (32) and the base of the protective shroud (56) does not co-rotate when the actuating element (32) rotates.

10. Air flap rotary drive (74) with a shaft adapter (10) according to one of claims 1 to 9.

11. Use of a shaft adapter (10) according to one of claims 1 to 9 for fixing a shaft (20) of an air flap (70).

## Revendications

1. Logement d'axe (10) destiné à être fixé à un axe (20), en particulier un axe (20) d'un clapet d'air (70), comprenant un étrier de traction (12) et un étrier de pression (14) mobile par rapport à l'étrier de traction (12) au moyen d'un arbre d'entraînement (30), dans lequel l'arbre d'entraînement (30) est guidé dans un guide d'arbre d'entraînement (34) dans l'étrier de traction (12), et dans lequel l'arbre d'entraînement (30) et le guide d'arbre d'entraînement (34) agissent comme dispositif de serrage rapide par le fait que l'arbre d'entraînement (30) comprend dans ou sur sa surface externe un contour à complémentarité de forme (40) et le guide d'arbre d'entraînement (34) comprend dans ou sur sa surface interne un contre-contour à complémentarité de forme (42), dans lequel le contour à complémentarité de forme (40) et le contre-contour à complémentarité de forme (42) peuvent être mis en prise l'un avec l'autre par rotation de l'arbre d'entraînement (30), et par conséquent l'arbre d'entraînement (30) peut être fixé axialement dans le guide d'arbre d'entraînement (34), **caractérisé en ce que** des filetages sectoriels (40, 42) agissent comme contour à complémentarité de forme (40) et contre-contour à complémentarité de forme (42).

2. Logement d'axe (10) selon la revendication 1, dans lequel le contour à complémentarité de forme (40) et le contre-contour à complémentarité de forme (42) comprennent le filetage sectoriel (40, 42) respectivement au moins dans une zone de 90° de la circonférence d'arbre d'entraînement et de 90° de la circonférence du guide d'arbre d'entraînement (34).

3. Logement d'axe (10) selon la revendication 2,
- dans lequel l'arbre d'entraînement (30) comprend le filetage sectoriel (40) dans deux zones circonférentielles d'arbre d'entraînement de respectivement 90° radialement opposées l'une à l'autre au niveau de l'arbre d'entraînement (30), et
- dans lequel le guide d'arbre d'entraînement (34) comprend le filetage sectoriel (42) dans deux zones circonférentielles de guide d'arbre d'entraînement de respectivement 90° radialement opposées l'une à l'autre dans le guide d'arbre d'entraînement (34).

4. Logement d'axe (10) selon l'une des revendications précédentes, avec une vis de verrouillage (44) s'étendant dans l'arbre d'entraînement (30) de manière concentrique avec l'arbre d'entraînement (30).

5. Logement d'axe (10) selon l'une des revendications 1 à 4, avec un dispositif de retour pour le déclenchement automatique d'une course de retour de l'étrier de pression (14) lorsque le contour à complémentarité de forme (40) et le contre-contour à complémentarité de forme (42) sont hors de prise.

6. Logement d'axe (10) selon la revendication 5,
- dans lequel le dispositif de retour comporte un ressort hélicoïdal (50) et une cage à ressort (52),
- dans lequel l'étrier de pression (14) est monté sur la cage à ressort (52),
- dans lequel le ressort hélicoïdal (50) s'appuie d'un côté sur l'extérieur de l'étrier de traction (12) et de l'autre côté sur l'intérieur de la cage à ressort (52) et
- dans lequel une course de retour de l'étrier de pression (14) peut être déclenchée au moyen du ressort hélicoïdal (50) et de la cage à ressort (52) lorsque le contour à complémentarité de forme (40) et le contre-contour à complémentarité de forme (42) sont hors de prise.

7. Logement d'axe (10) selon l'une des revendications 1 à 6, avec une protection anti-actionnement mobile, laquelle est alors efficace lorsque le contour à complémentarité de forme (40) et le contre-contour à complémentarité de forme (42) sont hors de prise.

8. Logement d'axe (10) selon la revendication 7, dans lequel une collerette de protection (54) télescopique agit comme protection anti-actionnement, laquelle collerette est rétractable dans un élément d'actionnement (32) destiné à la rotation de l'arbre d'entraînement (30) lorsque le contour à complémentarité de forme (40) et le contre-contour à complémentarité de forme (42) sont en prise par rotation correspondante de l'arbre d'entraînement (30) et laquelle collerette est déployée dans la position de protection anti-actionnement lorsque le contour à complémentarité de forme (40) et le contre-contour à complémentarité de forme (42) sont hors de prise.

9. Logement d'axe (10) selon la revendication 8,
- dans lequel pour la mobilité télescopique de la collerette de protection (54), celle-ci comprend dans sa surface interne au moins une coulisse de guidage (62) en hélice, dans laquelle s'étend un coulisseau (60) d'une base de collerette de protection (56),
- dans lequel la collerette de protection (54) peut tourner avec l'élément d'actionnement (32) et la base de collerette de protection (56) ne tourne pas lors d'une rotation de l'élément d'actionnement (32).

10. Entraînement rotatif de clapet d'air (74) avec un logement d'axe (10) selon l'une des revendications 1 à 9.

11. Utilisation d'un logement d'axe (10) selon l'une des revendications 1 à 9 pour la fixation d'un axe (20) d'un clapet d'air (70).
